# EUROPÄISCHE PATENTSCHRIFT

(11) **EP 4 427 647 B1**
(45) Veröffentlichungstag und Bekanntmachung des Hinweises auf die Patenterteilung: **14.01.2026**
(21) Anmeldenummer: 24161697.8
(22) Anmeldetag: 06.03.2024
(51) Int. Cl.: A47J 42/34, A47J 42/36

(54) **VORRICHTUNG ZUM ZERKLEINERN VON KRÄUTERN**
DEVICE FOR CHOPPING HERBS
DISPOSITIF DE BROYAGE D'HERBES

(30) Priorität: 07.03.2023 AT 501662023
(43) Veröffentlichungstag der Anmeldung: 11.09.2024
(73) Patentinhaber: Schweiger, Stefan, 8010 Graz (AT)
(72) Erfinder: SCHWEIGER, Stefan, 8010 Graz (AT); SCHNORPFEIL, Maximilian Stephan, 8010 Graz (AT)

(56) Entgegenhaltungen:
- WO-A1-2018/020785
- CN-U- 209 090 986
- US-A1- 2020 061 629
- US-B1- 11 433 398

## Beschreibung

Die Erfindung betrifft eine Vorrichtung zum Zerkleinern von Kräutern mit einer im Wesentlichen zylindrischen Kammer zur Aufnahme und Zerkleinerung von Kräutern, wobei die Kammer eine Rotationsachse aufweist und von wenigstens einem ersten Kammerteil und einem zweiten Kammerteil gebildet ist, die zueinander um die Rotationsachse verdrehbar sind, wobei an einem der Kammerteile ein im Wesentlichen in axialer Richtung in die Kammer hinein ragendes Trägerelement und an dem anderen der Kammerteile wenigstens eine sich im Wesentlichen in axialer Richtung erstreckende Trägerfläche angeordnet ist, wobei das Trägerelement und die Trägerfläche einander in einem sich in axiale Richtung erstreckenden Zerkleinerungsbereich überlappen, wobei im Zerkleinerungsbereich an dem Trägerelement einseitig wenigstens ein radial nach außen ragendes Zerkleinerungselement und an der Trägerfläche wenigstens ein radial nach innen ragendes Zerkleinerungselement angeordnet ist, und wobei die Zerkleinerungselemente durch ein Verdrehen der Kammerteile aneinander vorbeibewegbar sind, wobei sie einander radial überlappen.

Gewürzmühlen sind bekannte Vorrichtungen zum Zerkleinern von Pflanzenstoffen. Bei diesen werden harte Stoffe, wie z.B. Samen Körner, Rindenbestandteile oder getrocknete Früchte, mit annähernd vordefinierter Größe zermahlen.

Für leichtere Pflanzenstoffe, wie getrocknete Kräuter, werden andere Vorrichtungen, nämlich Vorrichtungen, die zum Zerkleinern von Pflanzenstoffen durch Zerschneiden oder Zerreißen geeignet sind, benötigt. Derartige Vorrichtungen werden oft als Kräutermühlen bezeichnet, wobei die Pflanzenteile jedoch nicht im eigentlichen Wortsinn zermahlen werden.

Aktuell gibt es im Wesentlichen zwei Verfahren zur Zerkleinerung von leichten Pflanzenstoffen bzw. Kräutern. Beim ersten Verfahren, welches vor allem bei Zerkleinerungsvorrichtungen zum Zerkleinern von CBD- oder Cannabis-Bestandteilen zur Anwendung kommt, greifen scharfkantige Elemente von oben und unten in eine Schneidekammer ein, in der vorher das Schneidgut platziert wird. Indem die scharfkantigen Elemente gegeneinander bzw. umeinander verdreht oder rotiert werden, wird das Schneidgut zerschnitten bzw. zerhäckselt. Der Nachteil an diesem Verfahren liegt darin, dass Schneidgut nur schwer oder gar nicht in die Schneidkammer nachfallen kann. Varianten mit integrierter Förderschnecke versuchen, das Nachfallen von Schneidgut zu verbessern, beschränken aber durch die Form der Förderschnecke die maximale Größe des unzerkleinerten Schneidgutes.

Das zweite Verfahren, das vor allem bei Kräutermühlen für frische Kräuter eingesetzt wird, nutzt eine scharfkantige Reibscheibe am Boden der Zerkleinerungsvorrichtung. Hier muss das Schneidgut in der Vorrichtung gegen die Reibscheibe gedrückt werden, damit durch eine Rotation der Reibscheibe (d.h. ein Reiben der Reibscheibe an dem daran angedrückten Schneidgut) ein Zerkleinern des Schneidgutes stattfinden kann. Das Andrücken des Schneidgutes wird durch Förderschnecken oder manuell über einen Stößel realisiert, wodurch derartige Vorrichtungen einen recht komplexen Aufbau aufweisen bzw. ebenfalls hinsichtlich der Größe des unzerkleinerten Schneidgutes begrenzt sind.

Vorrichtungen zum Zerkleinern von Kräutern sind beispielsweise aus WO 2018/020785 A1, TWM 426376 U, CN 2023 bekannt.

Der Erfindung liegt die Aufgabe zu Grunde, eine Vorrichtung zum Zerkleinern von Kräutern der eingangs genannten Gattung zur Verfügung zu stellen, die die angesprochenen Probleme so weit wie möglich vermeidet. Insbesondere soll eine Vorrichtung zum Zerkleinern von Kräutern bereitgestellt werden, die einen einfachen Aufbau aufweist und dazu geeignet ist, auch größeres bzw. gröberes Schneidgut einfach und effektiv zu zerkleinern.

Gelöst wird diese Aufgabe erfindungsgemäß mit einer Vorrichtung zum Zerkleinern von Kräutern, die die Merkmale von Anspruch 1 aufweist.

Bevorzugte und vorteilhafte Ausführungsformen der Erfindung sind Gegenstand der Unteransprüche.

Erfindungsgemäß ist vorgesehen, dass das Trägerelement derart geformt ist und in die Kammer ragt, dass durch das Verdrehen der Kammerteile ein zwischen dem Trägerelement und der Trägerfläche gebildeter Radialabstand zumindest über einen Abschnitt des Zerkleinerungsbereiches veränderbar ist.

Das Trägerelement ragt in axialer Richtung in die Kammer hinein, d.h. dass es eine in axiale Richtung verlaufende Längserstreckung aufweist, mit einem Ende am zugehörigen Kammerteil angeordnet ist und mit einem weiteren, freien Ende in die Kammer hinein ragt.

Bei einer vollen Umdrehung (360°) der Kammerteile zueinander bzw. um die Rotationsachse ist das Zerkleinerungselement bzw. sind die Zerkleinerungselemente des Trägerelementes einmal komplett an dem/den Zerkleinerungselement/en der Trägerfläche (bzw. jeder Trägerfläche) vorbeibewegbar. In der Kammer aufgenommenes Schneidgut, das sich im Zerkleinerungsbereich befindet, während die Zerkleinerungselemente aneinander vorbeibewegt werden (und einander Überlappen), wird durch die Scherbewegung, die die Schneidelemente ausüben, zerkleinert bzw. zerrissen oder zerschnitten.

Als Radialabstand zwischen der Trägerfläche und dem Trägerelement wird der kürzeste Abstand zwischen der Trägerfläche und der zur Trägerfläche weisenden Oberfläche des Trägerelementes in einer orthogonal zur Rotationsachse der Kammer verlaufenden Radialebene angesehen. Die zur Trägerfläche weisende Oberfläche des Trägerelementes kann beim Verdrehen der Kammerteile variieren (z.B. wenn das Trägerelement im Bereich der Radialebene keinen runden bzw. ovalen Querschnitt aufweist).

Der Radialabstand ist minimal, wenn die Zerkleinerungselemente einander überlappen (d.h. aneinander vorbeibewegt werden) und nimmt dann im Laufe einer vollen Umdrehung (d.h. einer vollen Verdrehung der Kammerteile zueinander) zuerst zu und dann wieder ab.

Mit anderen Worten ist der Radialabstand zwischen der Trägerfläche und dem Trägerelement, wenn die Zerkleinerungselemente des Trägerelementes zur Trägerfläche weisen (erster Zustand), kleiner, als wenn die Zerkleinerungselemente des Trägerelementes von der Trägerfläche wegweisen (zweiter Zustand).

Der Radialabstand ist zumindest über einen (oder in einem) Abschnitt des Zerkleinerungsbereiches veränderbar, vorzugsweise ist der Abstand jedoch über den gesamten Zerkleinerungsbereich veränderbar.

"Axial" bezeichnet im Rahmen der Erfindung eine Richtung in Richtung der Rotationsachse der im Wesentlichen zylindrischen Kammer. Ebenso bezeichnet "radial" im Rahmen der Erfindung eine Richtung normal auf diese Rotationsachse. "Umfangsseitig" bedeutet im Rahmen der Erfindung entlang oder an einem Mantel der zylindrischen Kammer. Als Grundseiten der Kammer werden im Rahmen der Erfindung die im Wesentlichen (offenen bzw. geschlossenen) kreisförmigen Endseiten der zylindrischen Kammer angesehen.

Da sich bei der erfindungsgemäßen Zerkleinerungsvorrichtung der Radialabstand zwischen der Trägerfläche und dem Trägerelement verändert, kann beim Vergrößern des Radialabstandes Schneidgut in den Zerkleinerungsbereich eindringen bzw. einfallen (oder "eingesaugt" werden), das anschließend beim Verringern des Radialabstandes festgeklemmt und zerkleinert wird.

Insbesondere ist im Rahmen der Erfindung eine Ausführungsform bevorzugt, bei der die im Wesentlichen zylindrische Kammer durch die Kammerteile umfangsseitig und jedenfalls an einer ersten Grundseite umschlossen ist. Das erste Kammerteil, das die erste Grundseite umschließt, weist dabei an der umschlossenen ersten Grundseite Löcher auf, durch die das zerkleinerte Schneidgut aus der Kammer herausfallen kann. Als Löcher werden auch Schlitze bzw. andere Formen von Durchgangsöffnungen angesehen.

Wenn der Radialabstand lediglich über einen Abschnitt des Zerkleinerungsbereiches veränderbar ist, verläuft dieser Abschnitt von einem von der umschlossenen Grundseite weg weisenden Ende des Trägerelementes (vorzugsweise dem freien Ende) in Richtung der umschlossenen Grundseite hin. Der Abschnitt, in dem der Radialabstand veränderbar ist, kann sich über wenigstens ein Drittel, vorzugsweise wenigstens die Hälfte, insbesondere wenigstens drei Viertel des Zerkleinerungsbereiches erstrecken.

Das erste Kammerteil kann die im Wesentlichen zylindrische Kammer umfangsseitig sowie an der ersten Grundseite umschließen. Alternativ dazu kann das erste Kammerteil die Kammer im Wesentlichen nur an der ersten Grundseite umschließen. Das zweite Kammerteil kann die im Wesentlichen zylindrische Kammer nur umfangsseitig umschließen, sodass die der umschlossenen ersten Grundseite gegenüberliegende zweite Grundseite unumschlossen ist. Möglich ist jedoch auch, dass das zweite Kammerteil die Kammer umfangsseitig sowie die zweite Grundseite umschließt oder alternativ dazu, dass das zweite Kammerteil im Wesentlichen nur die zweite Grundseite umschließt.

Vorzugsweise weist das zweite Kammerteil in einer Ausführungsform, bei der die zweite Grundseite unumschlossen (d.h. die Kammer an dieser Seite unverschlossen) ist, in einem an die zweite Grundseite angrenzenden Bereich Mittel, wie beispielsweise ein Gewinde, zur (lösbaren) Befestigung eines Behältnisses auf. Dieses Behältnis kann als Vorratsbehältnis für Kräuter dienen. Bei Ausführungsformen, in denen die zweite Grundseite ebenfalls umschlossen ist, dient die Kammer selbst als Vorratsbehältnis und kann, insbesondere an der nicht löchrigen Grundseite, öffenbar sein.

Vorzugsweise sind die Kammerteile im Wesentlichen nebeneinander bzw. hintereinander angeordnet. Das bedeutet im Rahmen der Erfindung jedoch nicht unbedingt, dass die Kammerteile direkt nebeneinander oder hintereinander angeordnet sind (sie können auch voneinander beabstandet sein). Weiters können die Kammerteile einander in axiale Richtung überlappen. Die Kammerteile können jeweils aus einem Bestandteil oder aus mehreren lösbar oder unlösbar miteinander verbundenen Bestandteilen bestehen.

Bevorzugt ist es, wenn das erste Kammerteil verdrehbar am oder im zweiten Kammerteil gelagert ist oder vice versa.

Das erste Kammerteil kann im Wesentlichen nur eine Art Kappe sein, die die erste Grundseite abdeckt, und die verdrehbar an oder in dem zumindest umfangsseitig die Kammer umschließenden zweiten Kammerteil gelagert ist. Ebenso ist es möglich, dass jedes der Kammerteile die Kammer über einen Abschnitt umfangsseitig umschließt. Denkbar (wenn auch nicht bevorzugt) ist auch, dass die Kammer umfangsseitig von einem weiteren (dritten) Kammerteil umschlossen ist und dass das erste und das zweite Kammerteil die Kammer nur an den Grundseiten umschließen (auch in diesem Fall sind die Kammerteile im Sinne der Erfindung nebeneinander angeordnet, wenn auch nicht direkt nebeneinander sondern durch das weitere Kammerteil beabstandet). Möglich ist auch, dass eines der Kammerteile gänzlich im anderen Kammerteil aufgenommen ist.

Die erste Grundseite kann mit einem Deckel verschließbar sein. Dafür kann am ersten Kammerteil ein Mittel (z.B. ein kreisringförmiger Vorsprung) zur Befestigung des Deckels vorgesehen sein.

In einer bevorzugten Ausführungsform ist das Trägerelement an der umschlossenen ersten Grundseite (d.h. an dem die erste Grundseite umschließenden Kammerteil im Bereich der ersten Grundseite) angeordnet, insbesondere befestigt, und ragt von dieser aus (mit einem freien Ende) in axialer Richtung in die Kammer hinein. Das Trägerelement ragt demnach in Richtung zweiter Grundseite der im Wesentlichen zylindrischen Kammer.

Vorzugsweise ist das Trägerelement dezentral in der Kammer angeordnet bzw. ragt das Trägerelement dezentral in axialer Richtung in die Kammer hinein. Das heißt im Rahmen der Erfindung, dass die Längsachse des Trägerelementes (die entlang der Längserstreckung des Trägerelementes verläuft) zur Rotationsachse der Kammer versetzt angeordnet ist. Durch eine derartige Anordnung verändert sich der Radialabstand beim Verdrehen der Kammerteile, da sich das Trägerelement im Wesentlichen auf einer Kreisbahn um die Rotationsachse bewegt und beim Vorbeibewegen an der Trägerfläche näher an diese herankommt, als an jedem anderen Punkt auf der Kreisbahn. Bevorzugt ist es, wenn das Trägerelement am ersten Kammerteil im Bereich der verschlossenen Grundseite angeordnet ist und von dieser in Richtung zur anderen Grundseite hin ragt.

Im Rahmen der Erfindung kann vorgesehen sein, dass an dem anderen der Kammerteile (d.h. an jenem Kammerteil, an dem das Trägerelement nicht angeordnet ist) umfangsseitig verteilt mehrere sich im Wesentlichen in axialer Richtung erstreckende Trägerflächen mit jeweils wenigstens einem Zerkleinerungselement angeordnet sind. Die Trägerflächen sind vorzugsweise im Wesentlichen gleich ausgestaltet. Dass die Trägerflächen umfangsseitig verteilt sind, bedeutet, dass sie voneinander beabstandet an einer Innenzylinderwand der Kammer angeordnet sind. Die Trägerflächen sind vorzugsweise rotationssymmetrisch verteilt angeordnet, sodass zwischen den Trägerelementen gleich große Abstände bestehen.

Denkbar, wenn auch nicht bevorzugt, sind Ausführungsformen mit mehreren Trägerelementen, die insbesondere alle dezentral (z.B. auf der gleichen Kreisbahn) an der gelöcherten ersten Grundseite angeordnet sind.

Insbesondere sind im Rahmen der Erfindung Ausführungsformen bevorzugt, in denen das Trägerelement und/oder die Trägerfläche bzw. ggf. Trägerflächen (sollten mehrere vorhanden sein) jeweils mehrere axial voneinander beabstandete Zerkleinerungselemente aufweist bzw. aufweisen. Die Zerkleinerungselemente der Trägerfläche/n und des Trägerelementes derartiger Ausführungsformen greifen ineinander, wenn sie aneinander vorbei bewegt werden, d.h. wenn zumindest ein Zerkleinerungselement der Trägerfläche zwischen zwei Zerkleinerungselementen des Trägerelementes hindurchbewegbar ist und/oder vice versa. Vorzugsweise sind die Zerkleinerungselemente der Trägerfläche/n und des Trägerelementes beim Überlappen bzw. Eingriff axial gesehen immer abwechselnd nebeneinander angeordnet. Vorzugsweise ist beim Eingriff der Zerkleinerungselemente nur ein sehr kleiner Spalt zwischen axial nebeneinander angeordneten und einander überlappenden Zerkleinerungselementen gebildet.

Das Trägerelement und die Trägerfläche bzw. jede der Trägerflächen können eine gleich große Anzahl an Zerkleinerungselementen oder eine ungleich große Anzahl aufweisen. Dabei kann sich die Anzahl der Zerkleinerungselemente zwischen dem Trägerelement und einer Trägerfläche insbesondere um "Eins" unterscheiden. Z.B. weisen das Trägerelement und die Trägerfläche/n jeweils drei oder vier Zerkleinerungselemente auf. Beispielsweise weist das Trägerelement drei und jede Trägerfläche vier Zerkleinerungselemente oder das Trägerelement vier und jede Trägerfläche drei Zerkleinerungselemente auf.

Besonders bevorzugt ist es, wenn das Trägerelement im Wesentlichen die Form eines Zylinders aufweist. Das Trägerelement kann überdies schräg abgeschnitten sein und so die Form eines schräg abgeschnittenen Zylinders aufweisen. Dabei liegt die Schrägfläche im Wesentlichen auf jener Seite des Zylinders, die frei von Zerkleinerungselementen ist (d.h. der Zylinder ist nicht auf der Seite der Zerkleinerungselemente, sondern auf der gegenüberliegenden Seite - der Rückseite - abgeschrägt). Die abgeschrägte Zylinderform bewirkt, dass beim Verdrehen der Kammerteile zueinander die Schrägfläche der Trägerfläche zugewandt wird, wodurch zumindest abschnittsweise der Radialabstand zwischen der Trägerfläche und der zur Trägerfläche weisenden Seite des Trägerelementes (noch stärker) zu- bzw. abnimmt. Auch bei einem nicht zylinderförmigen Trägerelement (z.B. einem prismenförmigen Trägerelement mit ovaler oder teilkreisförmiger oder rechteckiger oder anders geformter Grundfläche) kann das Trägerelement auf analoge Weise wie oben beschrieben abgeschrägt sein.

Besonders bevorzugt sind Ausführungsformen, in denen das Trägerelement ein dezentral an der ersten Grundseite angeordneter und abgeschrägter Zylinder ist. Bei derartigen Vorrichtungen findet beim Verdrehen der Kammerteile zueinander überall über den Zerkleinerungsbereich eine Veränderung (Vergrößerung und anschließend Verkleinerung) des Radialabstandes statt, die - aufgrund der Abschrägung - jedoch besonders groß an jenem Ende des Trägerelementes ist, das von der gelöcherten Grundseite weg weist (d.h. an dem freien Ende des Trägerelementes). Dadurch entsteht eine Art Trichter- oder Sogwirkung zur ersten Grundseite (d.h. zu den Löchern, aus denen das zerkleinerte Schneidgut aus der Kammer fallen kann) hin.

Im Rahmen der Erfindung kann vorgesehen sein, dass die Trägerfläche bzw. ggf. Trägerflächen direkt an jenem Kammerteil, an dem sie angeordnet ist/sind, ausgebildet ist/sind. Alternativ dazu kann/können die Trägerfläche bzw. ggf. Trägerflächen an einem mit diesem Kammerteil verbundenen Bauteil ausgebildet sein.

Vorzugsweise sind die Zerkleinerungselemente Vorsprünge, insbesondere platten- bzw. balkenförmige Vorsprünge. Bevorzugt weist zumindest eines der Zerkleinerungselemente bzw. weisen vorzugsweise einige der Zerkleinerungselemente oder sogar alle der Zerkleinerungselemente, an einer radial verlaufenden Seite eine Schneidkante auf.

Bei derartigen Ausführungsformen mit Schneidkanten sowohl bei dem/den Zerkleinerungselement/en an der Trägerfläche als auch bei jenem/jenen an dem Trägerelement sind die Schneidkanten überlappender Zerkleinerungselemente vorzugsweise in entgegengesetzte Richtungen ausgerichtet. Möglich ist auch, dass nur das/die Zerkleinerungselement/e des Trägerelementes oder der Trägerfläche/n eine Schneidkante aufweist bzw. Schneidkanten aufweisen.

Im Rahmen der Erfindung ist vorgesehen, dass die Kammerteile manuell oder elektrisch angetrieben zueinander verdrehbar sind.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:
- Fig. 1: eine Draufsicht der erfindungsgemäßen Vorrichtung in Richtung einer Rotationsachse einer zylindrischen Kammer der Vorrichtung,
- Fig. 2: eine Schnittansicht der in Fig. 1 dargestellten, erfindungsgemäßen Vorrichtung entlang einer durch die Rotationsachse verlaufenden Schnittebene II-II
- Fig. 3 bis 5: stark vereinfachte Draufsichten einer weiteren Ausführungsform der erfindungsgemäßen Vorrichtung entlang der Rotationsachse.

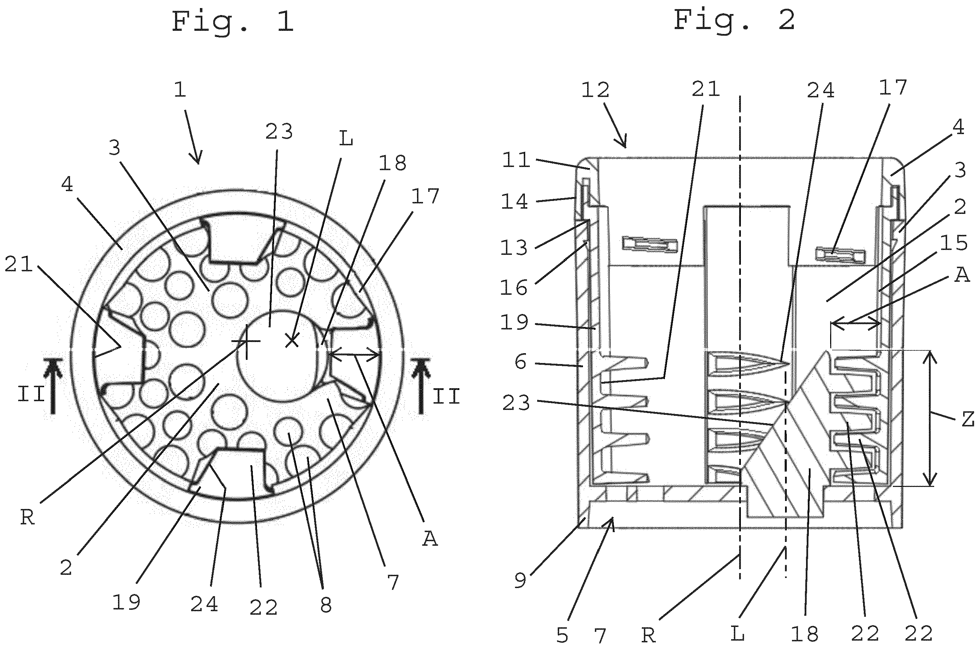

Fig. 1 zeigt die erfindungsgemäße Vorrichtung 1 zum Zerkleinern von Kräutern, die eine zylindrische (d.h. zylinderförmige) Kammer 2 mit einer Rotationsachse R aufweist. Die Draufsicht in Fig. 1 erfolgt in Richtung der Rotationsachse R.

Fig. 2 zeigt eine Schnittansicht durch die in Fig. 1 dargestellte Ausführungsform der erfindungsgemäßen Vorrichtung, wobei die Schnittebene II-II entlang der Rotationsachse R verläuft.

Die zylindrische Kammer 2 ist von einem ersten Kammerteil 3 und einem zweiten Kammerteil 4 gebildet, d.h. sie ist durch diese Kammerteile 3, 4 begrenzt bzw. zumindest teilweise von diesen Kammerteilen 3, 4 umschlossen.

Das erste Kammerteil 3 umschließt die Kammer 2 umfangsseitig mit einer rohrförmigen ersten Zylinderwand 6, sowie an einer ersten Grundseite 5 mit einer kreisförmigen Verschlussplatte 7. Im Bereich der ersten Grundseite 5 (d.h. in der Verschlussplatte 7) weist das erste Kammerteil 3 Löcher 8 auf. Die erste Grundseite 5 kann daher auch als gelöcherte Grundseite 5 bzw. die Verschlussplatte 7 als gelöcherte Verschlussplatte 7 bezeichnet werden.

Die erfindungsgemäße Vorrichtung 1 kann einen nicht dargestellten Deckel aufweisen, der im Bereich der ersten Grundseite 5 an dem ersten Kammerteil 3 ansteckbar bzw. anschraubbar ist, sodass er im Wesentlichen orthogonal zur Rotationsachse R ausgerichtet ist. Der Deckel kann in der dargestellten Ausführungsform auf die über die Verschlussplatte 7 hinausragende erste Zylinderwand 6, die einen von der ersten Grundseite 5 wegragenden kreisringförmigen Vorsprung 9 bildet, aufgesteckt werden.

Das zweite Kammerteil 4 umschließt die Kammer 2 mit einer zweiten Zylinderwand 11 nur umfangsseitig, wobei die Kammer 2 an ihrer zweiten Grundseite 12 unumschlossen ist.

Die zweite Zylinderwand 11 weist eine umfangseitig nach außen gerichtete Stufe 13 auf, sodass sie in einen Wandabschnitt 14, der in axialer Richtung direkt an die erste Zylinderwand 6 anschließt, und einem Steckabschnitt 15 mit verringertem Außendurchmesser, der in die erste Zylinderwand 6 des ersten Kammerteiles 3 eingesteckt ist (sodass die Kammerteile 3, 4 einander bereichsweise überlappen), unterteilt ist. Ein nach außen gerichteter, umlaufender Vorsprung am Ende des Steckabschnittes 15 greift in eine nach innen weisende umlaufende Nut der ersten Zylinderwand 6 ein und bildet eine formschlüssige Nut-Feder-Verbindung 16. Durch diese Nut-Feder-Verbindung 16 sind die zwei Kammerteile 3, 4 zwar um die Rotationsachse R gegeneinander verdrehbar, aber gegen ein axiales Verschieben gegeneinander gesichert.

Angrenzend an die zweite Grundseite 12 weist das zweite Kammerteil 4 ein Mittel 17 zum Befestigen eines nicht dargestellten Vorratsbehälters auf, wobei dieses Mittel 17 in der dargestellten Ausführungsform ein Innengewinde ist.

Das zweite Kammerteil 4 ist in axialer Richtung (d.h. in Richtung der Rotationsachse R) gesehen im Wesentlichen neben dem ersten Kammerteil 3 angeordnet und (gegenüber dem ersten Kammerteil 3) um die Rotationsachse R verdrehbar am ersten Kammerteil 3 gelagert.

An dem ersten Kammerteil 3 ist ein Trägerelement 18 angeordnet, wobei das Trägerelement 18 in der dargestellten Ausführungsform die Form eines schräg abgeschnittenen Zylinders aufweist.

Das Trägerelement 18 ist im Bereich der ersten Grundseite 5, d.h. an der Verschlussplatte 7, an dem ersten Kammerteil 3 angeordnet bzw. mit diesem verbunden, sodass es in axialer Richtung in die Kammer 2 hineinragt. In der dargestellten Ausführungsform ist das Trägerelement 18 mit einer Art Bajonettverschluss mit der Verschlussplatte 7 verbunden, es kann jedoch auch angeklebt, eingeschraubt, eingepresst oder auf andere Art (direkt oder indirekt) mit dem ersten Kammerteil 3 verbunden sein.

Das Trägerelement 18 ist dezentral in der Kammer 2 angeordnet, d.h. eine zentrale Längsachse L des zylinderförmigen Trägerelementes 18 und die Rotationsachse R sind nicht kongruent, sondern parallel zueinander und voneinander beabstandet.

Mit dem zweiten Kammerteil 4 sind vier zungenförmige Bauteile 19 verbunden, die an einer Innenseite der ersten Zylinderwand 6 in Richtung erster Grundseite 5 hin verlaufend in die Kammer 2 hineinragen. Jedes zungenförmige Bauteil 19 weist eine nach innen weisende Trägerfläche 21 auf, wobei sich das Trägerelement 18 und die Trägerfläche/n 21 in einem in axialer Richtung verlaufenden Zerkleinerungsbereich Z überlappen.

In dem Zerkleinerungsbereich Z weisen sowohl die Trägerflächen 21 als auch das Trägerelement 18 Zerkleinerungselemente 22 in Form von plattenförmigen Vorsprüngen auf. Die Zerkleinerungselemente 22 der Trägerflächen 21 weisen radial nach innen (zur Rotationsachse R hin) und die Zerkleinerungselemente 22 des Trägerelementes 18 weisen radial nach außen.

Die Zerkleinerungselemente 22 sind demnach an jener Seite des Trägerelementes 18 angeordnet, die radial gesehen am weitesten von der Rotationsachse R entfernt und durchgehend zu den Zylinderwänden 6, 11 hin gerichtet ist. Eine abgeschrägte Seite 23 des (als schräg abgeschnittener Zylinder ausgeführten) Trägerelementes 18 liegt auf dessen gegenüberliegender, der Rotationsachse R zugewandten, Seite.

Die Zerkleinerungselemente 22 an den Trägerflächen 21 sind kurz genug, dass sie beim Verdrehen der Kammerteile 3, 4 zueinander nicht mit dem Trägerelement 18 kollidieren und die Zerkleinerungselemente 22 an dem Trägerelement 18 sind kurz genug, dass sie beim Verdrehen der Kammerteile 3, 4 zueinander nicht mit der/den Trägerfläche/n 21 kollidieren. Gleichzeitig sind die Zerkleinerungselemente 22 lang genug, um (radial gesehen) einander zu überlappen, wenn die Kammerteile 3, 4 derart zueinander verdreht werden, dass die Zerkleinerungselemente 22 des Trägerelementes 18 an den Zerkleinerungselementen 22 einer der Trägerflächen 21 vorbeibewegt werden.

Damit die Zerkleinerungselemente 22 beim Verdrehen der Kammerteile 3, 4 nicht miteinander kollidieren, sind die Zerkleinerungselemente 22 der Trägerflächen 21 in axialer Richtung jeweils zu den Zerkleinerungselementen 22 des Trägerelementes 18 versetzt angeordnet. In der dargestellten Ausführungsform weist das Trägerelement 18 drei und jede der Trägerflächen 21 vier Zerkleinerungselemente 22 auf, wobei in axialer Richtung immer abwechselnd ein Zerkleinerungselement 22 der Trägerflächen 21 und ein Zerkleinerungselement 22 des Trägerelementes angeordnet ist. Beim aneinander Vorbeibewegen bzw. Überlappen greifen die Zerkleinerungselemente 22 des Trägerelementes 18 in die Zerkleinerungselemente 22 der daran vorbeibewegten Trägerfläche 21 ein und vice versa.

Die Zerkleinerungselemente 22 weisen jeweils an einer radial verlaufenden Seite eine Schneidkante 24 auf. Beim Verdrehen der Kammerteile 3, 4 in die jeweilige für das Zerkleinern vorgesehene Umdrehungsrichtung treffen die Zerkleinerungselemente 24 und das Trägerelemente 18 immer zuerst mit ihren Schneidkanten 24 aufeinander, sodass zwischen dem Trägerelement 18 und der jeweiligen Trägerfläche 21 aufgenommenes Schneidgut möglichst wirkungsvoll zerkleinert wird. In der in den Fig. 1 und 2 dargestellten Ausführungsform muss für das effektive Zerkleinern das erste Kammerteil 3 mit dem Trägerelement 18 gegen den Uhrzeigersinn und/oder das zweite Kammerteil 4 mit den Trägerflächen 21 im Uhrzeigersinn um die Rotationsachse R gedreht werden.

Ein zwischen jeder Trägerfläche 21 und dem Trägerelement 18 gebildeter Radialabstand A wird durch das Verdrehen der Kammerteile 3, 4 zueinander verändert (d.h. vergrößert oder verkleinert). Der Radialabstand A ist dabei der kürzeste Abstand zwischen der jeweiligen Trägerfläche 21 und dem Trägerelement 18 in einer Radialebene gesehen, d.h. in einer Ebene orthogonal zur Rotationsachse R.

Der Radialabstand A zwischen einer Trägerfläche 21 und dem Trägerelement 18 ist immer dann minimal, wenn die Zerkleinerungselemente 22 der jeweiligen Trägerfläche 21 an den Zerkleinerungselementen 22 des Trägerelementes 18 vorbeibewegt werden (d.h. wenn sie einander überlappen bzw. ineinander eingreifen). Dies liegt einerseits daran, dass das Trägerelement 18 dezentral in der Kammer 2 (bzw. am ersten Kammerteil 3) angeordnet ist. Andererseits liegt es daran, dass das Trägerelement 18 die Form eines abgeschrägten Zylinders aufweist, sodass über jenen axial verlaufenden Abschnitt des Zerkleinerungsbereiches Z, über den sich die abgeschrägte Seite 23 erstreckt (d.h. in der dargestellten Ausführungsform, über den gesamten Zerkleinerungsbereich), eine verstärkte Veränderung des Radialabstandes A beim Verdrehen der Kammerteile 3, 4 erfolgt.

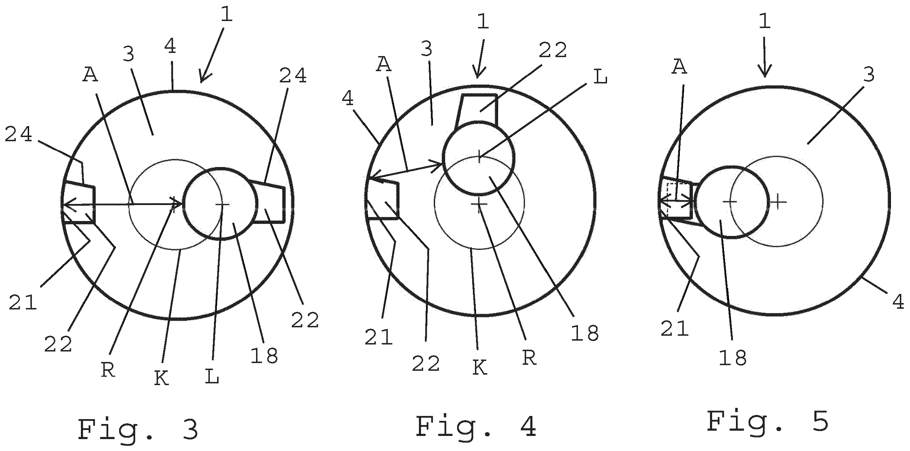

Die Veränderung des Radialabstandes A beim Verdrehen der Kammerteile 3, 4 zueinander ist in den Fig. 3 bis 5 veranschaulicht, wobei die Fig. 3 bis 5 in stark vereinfachter Form eine weitere Ausführungsform der erfindungsgemäßen Vorrichtung 1 in einer Draufsicht zeigen.

Bei dieser Ausführungsform ist nur eine einzige Trägerfläche 21 am zweiten Kammerteil 4 angeordnet (bzw. direkt an diesem ausgebildet). Außerdem weist das zylinderförmige Trägerelement 18 keine abgeschrägte Seite 23 auf.

In den dargestellten Ausführungsformen werden die Kammerteile 3, 4 zueinander verdreht, wobei lediglich das erste Kammerteil 3 um die Rotationsachse R verdreht wird und das zweite Kammerteil 4 stillsteht.

Das Trägerelement 18 ist dezentral in der Kammer 2 angeordnet, d.h. die Längsachse L des Trägerelementes 18 ist zur Rotationsachse R der Kammer 2 versetzt. Beim Verdrehen der Kammerteile 3, 4 zueinander bewegt sich die Längsachse L des Trägerelementes 18 - wie schematisch dargestellt - auf einer Kreisbahn K um die Rotationsachse R herum.

Fig. 3 zeigt das dezentral in der Kammer 2 angeordnete Trägerelement 18 in einer am weitesten von der Trägerfläche 21 entfernten Position. Anschließend daran wird das Trägerelement 18, wie in den Fig. 4 und 5 dargestellt, gegen den Uhrzeigersinn um die Rotationsachse R rotiert, indem das erste Kammerteil 3 um die Rotationsachse R verdreht wird (bzw. indem die Kammerteile 3, 4 zueinander verdreht werden). Dabei verringert sich der Radialabstand A zwischen der Trägerfläche 21 und dem Trägerelement 18 kontinuierlich, bis die Zerkleinerungselemente 22 der Trägerfläche 21 und des Trägerelementes 18 aneinander vorbeibewegt werden (bzw. einander überlappen) und der Radialabstand A minimal ist. Wenn das erste Kammerteil 3 - wie in den Fig. 3 bis 5 nicht mehr dargestellt ist - noch weiter gegen den Uhrzeigersinn verdreht wird, vergrößert sich der Radialabstand A zwischen dem Trägerelement 8 und der Trägerfläche 21 wieder bis zu einem maximalen Radialabstand A.

### Bezugszeichenliste:

- 1: Vorrichtung
- 2: zylindrische Kammer
- 3: erster Kammerteil
- 4: zweiter Kammerteil
- 5: erste Grundseite
- 6: erste Zylinderwand
- 7: Verschlussplatte
- 8: Löcher
- 9: kreisförmiger Vorsprung
- 10: ---
- 11: zweite Zylinderwand
- 12: zweite Grundseite
- 13: Stufe
- 14: Wandabschnitt
- 15: Steckabschnitt
- 16: Nut-Feder-Verbindung
- 17: Mittel zum Befestigen
- 18: Trägerelement
- 19: zungenförmiges Bauteil
- 20: ----
- 21: Trägerfläche
- 22: Zerkleinerungselement
- 23: abgeschrägte Seite
- 24: Schneidkante

- R: Rotationsachse Kammer
- L: Längsachse Trägerelement
- Z: Zerkleinerungsbereich
- A: Radialabstand
- K: Kreisbahn

## Patentansprüche

1. Vorrichtung (1) zum Zerkleinern von Kräutern mit einer im Wesentlichen zylindrischen Kammer (2) zur Aufnahme und Zerkleinerung von Kräutern, wobei die Kammer (2) eine Rotationsachse (R) aufweist und von wenigstens einem ersten Kammerteil (3) und einem zweiten Kammerteil (4) gebildet ist, die zueinander um die Rotationsachse (R) verdrehbar sind, wobei an einem der Kammerteile (3, 4) ein im Wesentlichen in axialer Richtung in die Kammer (2) hinein ragendes Trägerelement (18) und an dem anderen der Kammerteile (4, 3) wenigstens eine sich im Wesentlichen in axialer Richtung erstreckende Trägerfläche (21) angeordnet ist, wobei das Trägerelement (18) und die Trägerfläche (21) einander in einem sich in axiale Richtung erstreckenden Zerkleinerungsbereich (Z) überlappen, wobei im Zerkleinerungsbereich (Z) an dem Trägerelement (18) einseitig wenigstens ein radial nach außen ragendes Zerkleinerungselement (22) und an der Trägerfläche (21) wenigstens ein radial nach innen ragendes Zerkleinerungselement (22) angeordnet ist, und wobei die Zerkleinerungselemente (22) durch ein Verdrehen der Kammerteile (3, 4) aneinander vorbeibewegbar sind, wobei sie einander radial überlappen, **dadurch gekennzeichnet, dass** das Trägerelement (18) derart geformt ist und in die Kammer (2) ragt, dass durch das Verdrehen der Kammerteile (3, 4), ein zwischen dem Trägerelement (18) und der Trägerfläche (21) gebildeter Radialabstand (A), zumindest über einen Abschnitt des Zerkleinerungsbereiches (Z), veränderbar ist.

2. Vorrichtung nach Anspruch 1, **dadurch gekennzeichnet, dass** die im Wesentlichen zylindrische Kammer (2) durch die Kammerteile (3, 4) umfangsseitig und jedenfalls an einer ersten Grundseite (5) umschlossen ist, wobei das die erste Grundseite (5) umschließende Kammerteil (3, 4) an der umschlossenen ersten Grundseite (5) Löcher (8) aufweist.

3. Vorrichtung nach Anspruch 2, **dadurch gekennzeichnet, dass** das erste Kammerteil (3) die im Wesentlichen zylindrische Kammer (2) umfangsseitig sowie an der ersten Grundseite (5) oder im Wesentlichen nur an der ersten Grundseite (5) umschließt.

4. Vorrichtung nach Anspruch 3, **dadurch gekennzeichnet, dass** das zweite Kammerteil (4) die im Wesentlichen zylindrische Kammer (2) umfangsseitig umschließt und die der umschlossenen ersten Grundseite (5) gegenüberliegende zweite Grundseite (12) unumschlossen ist, wobei vorzugsweise das zweite Kammerteil (4) in einem an die zweite Grundseite (12) angrenzenden Bereich Mittel (17), beispielsweise ein Gewinde, zum Befestigen eines Behältnisses aufweist, oder dass das zweite Kammerteil (4) die Kammer (2) umfangsseitig sowie die zweite Grundseite (12) umschließt oder dass das zweite Kammerteil (4) im Wesentlichen nur die zweite Grundseite (12) umschließt.

5. Vorrichtung nach einem der Ansprüche 1 bis 4, **dadurch gekennzeichnet, dass** die Kammerteile (3, 4) in axialer Richtung im Wesentlichen nebeneinander bzw. hintereinander angeordnet sind, wobei sie sich vorzugsweise zumindest bereichsweise überlappen.

6. Vorrichtung nach einem der Ansprüche 2 bis 5, **dadurch gekennzeichnet, dass** das Trägerelement (18) an der umschlossenen ersten Grundseite (5) angeordnet ist und von dieser aus in axialer Richtung in die Kammer (2) hinein ragt.

7. Vorrichtung nach einem der Ansprüche 1 bis 6, **dadurch gekennzeichnet, dass** das Trägerelement (18) dezentral in der Kammer (2) angeordnet ist bzw. in diese hineinragt.

8. Vorrichtung nach einem der Ansprüche 1 bis 7, **dadurch gekennzeichnet, dass** an dem anderen der Kammerteile (4, 3) umfangsseitig verteilt mehrere sich im Wesentlichen in axialer Richtung erstreckende Trägerflächen (21) mit jeweils wenigstens einem Zerkleinerungselement (22) angeordnet sind.

9. Vorrichtung nach einem der Ansprüche 1 bis 8, **dadurch gekennzeichnet, dass** das Trägerelement (18) und/oder die Trägerfläche (21) bzw. ggf. Trägerflächen (21) jeweils mehrere axial voneinander beabstandete Zerkleinerungselemente (22) aufweist bzw. aufweisen, und dass die Zerkleinerungselemente (22) beim aneinander Vorbeibewegen ineinander eingreifen.

10. Vorrichtung nach einem der Ansprüche 1 bis 9, **dadurch gekennzeichnet, dass** das Trägerelement (18) im Wesentlichen die Form eines Zylinders aufweist.

11. Vorrichtung nach Anspruch 10, **dadurch gekennzeichnet, dass** das Trägerelement (18) schräg abgeschnitten ist und die Form eines schräg abgeschnittenen Zylinders aufweist, wobei eine dadurch gebildete Schrägfläche (23) im Wesentlichen an jener Seite des Zylinders liegt, die frei von Zerkleinerungselementen (22) ist.

12. Vorrichtung nach einem der Ansprüche 1 bis 11, **dadurch gekennzeichnet, dass** die Trägerfläche (21) bzw. ggf. Trägerflächen (21) an jenem Kammerteil (4, 3), an dem sie angeordnet ist/sind, oder an einem mit diesem Kammerteil (4, 3) verbundenen Bauteil (19) ausgebildet ist/sind.

13. Vorrichtung nach einem der Ansprüche 1 bis 12, **dadurch gekennzeichnet, dass** die Zerkleinerungselemente (22) insbesondere platten- bzw. balkenförmige Vorsprünge sind.

14. Vorrichtung nach Anspruch 13, **dadurch gekennzeichnet, dass** zumindest eines der Zerkleinerungselemente (22), vorzugsweise einige der Zerkleinerungselemente (22), insbesondere alle der Zerkleinerungselemente (22), an einer radial verlaufenden Seite eine Schneidkante (24) aufweist/aufweisen.

15. Vorrichtung nach einem der Ansprüche 1 bis 14, **dadurch gekennzeichnet, dass** die Kammerteile (3, 4) manuell oder elektrisch angetrieben zueinander verdrehbar sind.

## Claims

1. Device (1) for comminuting herbs with a substantially cylindrical chamber (2) for receiving and comminuting herbs, the chamber (2) having a rotational axis (R) and being formed by at least a first chamber part (3) and a second chamber part (4) which are rotatable relative to one another about the rotational axis (R), wherein on one of the chamber parts (3, 4) a carrier element (18) extending substantially in axial direction into the chamber (2) is arranged, and on the other of the chamber parts (4, 3) at least one carrier surface (21) extending substantially in axial direction is arranged, the carrier element (18) and the carrier surface (21) overlapping one another in a comminuting region (Z) extending in axial direction, wherein in the comminuting region (Z) at least one radial outwardly extending comminuting element (22) is arranged on the carrier element (18) on one side and at least one radial inwardly extending comminuting element (22) is arranged on the carrier surface (21), and wherein the comminuting elements (22) are movable past one another by rotating the chamber parts (3, 4) so that they overlap radially, **characterized in that** the carrier element (18) is shaped and extends into the chamber (2) such that, by rotating the chamber parts (3, 4), a radial distance (A) formed between the carrier element (18) and the carrier surface (21) is variable at least over a section of the comminuting region (Z).

2. Device according to claim 1, **characterized in that** the substantially cylindrical chamber (2) is enclosed by the chamber parts (3, 4) in the circumferential direction and at least at a first base surface (5), wherein the chamber part (3, 4) enclosing the first base surface (5) has holes (8).

3. Device according to claim 2, **characterized in that** the first chamber part (3) encloses the substantially cylindrical chamber (2) in the circumferential direction and at the first base surface (5) or substantially only at the first base surface (5).

4. Device according to claim 3, **characterized in that** the second chamber part (4) encloses the substantially cylindrical chamber (2) in the circumferential direction and the second base surface (12), opposite the enclosed first base surface (5), is left open, wherein preferably the second chamber part (4) in a region adjacent to the second base surface (12) has means (17), for example a thread, for attaching a container, or that the second chamber part (4) encloses the chamber (2) in the circumferential direction as well as the second base surface (12), or that the second chamber part (4) substantially only encloses the second base surface (12).

5. Device according to any one of claims 1 to 4, **characterized in that** the chamber parts (3, 4) are arranged substantially side by side or one behind the other in the axial direction, wherein they preferably at least partially overlap.

6. Device according to any one of claims 2 to 5, **characterized in that** the carrier element (18) is arranged at the enclosed first base surface (5) and projects from there in the axial direction into the chamber (2).

7. Device according to any one of claims 1 to 6, **characterized in that** the carrier element (18) is arranged eccentrically in the chamber (2) or projects into the chamber.

8. Device according to any one of claims 1 to 7, **characterized in that**, on the other of the chamber parts (4, 3), a plurality of carrier surfaces (21) extending substantially in the axial direction are distributed around the circumference, each having at least one comminuting element (22) arranged thereon.

9. Device according to any one of claims 1 to 8, **characterized in that** the carrier element (18) and/or the carrier surface (21) or, if applicable, carrier surfaces (21) each have a plurality of axially spaced comminuting elements (22), and **in that** the comminuting elements (22) engage with one another when moved past each other.

10. Device according to any one of claims 1 to 9, **characterized in that** the carrier element (18) essentially has the shape of a cylinder.

11. Device according to claim 10, **characterized in that** the carrier element (18) is obliquely cut and has the shape of an obliquely cut cylinder, wherein an oblique surface (23) formed thereby is essentially on that side of the cylinder which is free of comminuting elements (22).

12. Device according to any one of claims 1 to 11, **characterized in that** the carrier surface (21) or, where applicable, the carrier surfaces (21) are formed on that chamber part (4, 3) on which they are arranged, or on a component (19) connected to said chamber part (4, 3).

13. Device according to any one of claims 1 to 12, **characterized in that** the comminuting elements (22) are in particular plate- or bar-shaped projections.

14. Device according to claim 13, **characterized in that** at least one of the comminuting elements (22), preferably some of the comminuting elements (22), in particular all of the comminuting elements (22), has/have a cutting edge (24) on a radially extending side.

15. Device according to any one of claims 1 to 14, **characterized in that** the chamber parts (3, 4) are rotatable relative to each other, either manually or electrically driven.

## Revendications

1. Dispositif (1) pour broyer des herbes avec une chambre (2) essentiellement cylindrique pour recevoir et broyer des herbes, la chambre (2) présentant un axe de rotation (R) et étant formée d'au moins une première partie de chambre (3) et d'une deuxième partie de chambre (4), lesquelles sont pivotables l'une par rapport à l'autre autour de l'axe de rotation (R), étant prévu qu'un élément porteur (18) s'étendant essentiellement en direction axiale dans la chambre (2) soit disposé sur l'une des parties de chambre (3, 4) et qu'au moins une surface porteuse (21) s'étendant essentiellement en direction axiale soit disposée sur l'autre des parties de chambre (4, 3), l'élément porteur (18) et la surface porteuse (21) se chevauchant dans une zone de broyage (Z) s'étendant en direction axiale, étant prévu que dans la zone de broyage (Z), au moins un élément broyant (22) s'étendant radialement vers l'extérieur soit disposé sur l'élément porteur (18) et au moins un élément broyant (22) s'étendant radialement vers l'intérieur soit disposé sur la surface porteuse (21), les éléments broyants (22) pouvant passer l'un à côté de l'autre par rotation des parties de chambre (3, 4), se chevauchant radialement, **caractérisé en ce que** l'élément porteur (18) est conçu et s'étend dans la chambre (2) de telle sorte que, par rotation des parties de chambre (3, 4), un espacement radial (A) formé entre l'élément porteur (18) et la surface porteuse (21) soit modifiable, au moins sur une section de la zone de broyage (Z).

2. Dispositif selon la revendication 1, **caractérisé en ce que** la chambre (2) essentiellement cylindrique est entourée par les parties de chambre (3, 4) sur la circonférence et au moins sur une première surface de base (5), la partie de chambre (3, 4) entourant la première surface de base (5) présentant des trous (8).

3. Dispositif selon la revendication 2, **caractérisé en ce que** la première partie de chambre (3) entoure la chambre (2) essentiellement cylindrique à la fois sur la circonférence et sur la première surface de base (5) ou essentiellement uniquement sur la première surface de base (5).

4. Dispositif selon la revendication 3, **caractérisé en ce que** la deuxième partie de chambre (4) entoure la chambre (2) essentiellement cylindrique sur la circonférence et que la deuxième surface de base (12), opposée à la première surface de base (5) entourée, n'est pas entourée, la deuxième partie de chambre (4) présentant de préférence dans une zone adjacente à la deuxième surface de base (12) des moyens (17), par exemple un filetage, pour fixer un récipient, ou **en ce que** la deuxième partie de chambre (4) entoure la chambre (2) à la fois sur la circonférence et sur la deuxième surface de base (12), ou **en ce que** la deuxième partie de chambre (4) entoure essentiellement uniquement la deuxième surface de base (12).

5. Dispositif selon l'une des revendications 1 à 4, **caractérisé en ce que** les parties de chambre (3, 4) sont disposées essentiellement côte à côte ou l'une derrière l'autre en direction axiale, de préférence en se chevauchant au moins partiellement.

6. Dispositif selon l'une des revendications 2 à 5, **caractérisé en ce que** l'élément porteur (18) est disposé sur la première surface de base (5) entourée et s'étend à partir de celle-ci en direction axiale dans la chambre (2).

7. Dispositif selon l'une des revendications 1 à 6, **caractérisé en ce que** l'élément porteur (18) est disposé de manière décentrée dans la chambre (2) ou s'y étend.

8. Dispositif selon l'une des revendications 1 à 7, **caractérisé en ce que** sur l'autre des parties de chambre (4, 3) sont disposées sur la circonférence plusieurs surfaces porteuses (21) s'étendant essentiellement en direction axiale, chacune présentant au moins un élément de broyage (22).

9. Dispositif selon l'une des revendications 1 à 8, **caractérisé en ce que** l'élément porteur (18) et/ou la surface porteuse (21) ou éventuellement les surfaces porteuses (21) présentent chacune plusieurs éléments de broyage (22) espacés axialement les uns des autres, et **en ce que** les éléments de broyage (22) s'engrènent les uns dans les autres lorsqu'ils passent les uns devant les autres.

10. Dispositif selon l'une des revendications 1 à 9, **caractérisé en ce que** l'élément porteur (18) présente essentiellement la forme d'un cylindre.

11. Dispositif selon la revendication 10, **caractérisé en ce que** l'élément porteur (18) est coupé en biais et présente la forme d'un cylindre tronqué obliquement, une surface oblique (23) ainsi formée se situant essentiellement du côté du cylindre dépourvu d'éléments de broyage (22).

12. Dispositif selon l'une des revendications 1 à 11, **caractérisé en ce que** la surface porteuse (21) ou, le cas échéant, les surfaces porteuses (21) est/sont formée(s) sur la partie de chambre (4, 3) sur laquelle elle/elles est/sont disposée(s), ou sur un composant (19) relié à cette partie de chambre (4, 3).

13. Dispositif selon l'une des revendications 1 à 12, **caractérisé en ce que** les éléments de broyage (22) sont notamment des saillies de forme plate ou en barre.

14. Dispositif selon la revendication 13, **caractérisé en ce qu'**au moins un des éléments de broyage (22), de préférence certains des éléments de broyage (22), en particulier tous les éléments de broyage (22), présente/presentent sur un côté radial un tranchant (24).

15. Dispositif selon l'une des revendications 1 à 14, **caractérisé en ce que** les parties de chambre (3, 4) sont pivotables les unes par rapport aux autres, entraînées manuellement ou électriquement.
